# EUROPÄISCHE PATENTSCHRIFT

(11) **EP 0 661 528 B1**
(45) Veröffentlichungstag und Bekanntmachung des Hinweises auf die Patenterteilung: **28.08.2002**
(21) Anmeldenummer: 94890219.2
(22) Anmeldetag: 23.12.1994
(51) Int. Cl.: G01M 3/24, G01M 3/00

(54) **Bestimmung von Fehlstellen einer Rohrleitung für Fluide, Schallmolch mit Störgeräusch-Abschirmung**
Detecting defects in a fluid transporting pipe, sound pig with noise shielding
Détection de défauts dans une canalisation pour fluide, écouvillon de son avec un blindage anti- bruits

(30) Priorität: 30.12.1993 AT 265693
(43) Veröffentlichungstag der Anmeldung: 05.07.1995
(73) Patentinhaber: OMV Aktiengesellschaft, 1091 Wien (AT); TECHNISCHER ÜBERWACHUNGS-VEREIN ÖSTERREICH, 1015 Wien (AT)
(72) Erfinder: Edinger, Helmut, Ing., A-1220 Wien (AT); Tscheliesnig, Peter, Dipl.-Ing., A-3400 Klosterneuburg (AT)
(74) Vertreter: Widtmann, Georg, Dipl.-Ing. Dr. techn.

(56) Entgegenhaltungen:
- GB-A- 1 149 284
- US-A- 2 884 624
- US-A- 3 363 450
- US-A- 3 508 433
- US-A- 3 561 256
- US-A- 3 691 819
- US-A- 3 744 298

## Beschreibung

Die Erfindung betrifft eine Vorrichtung zur Bestimmung von Fehlstellen, insbesondere Lecks, einer Rohrleitung für Fluide, z. B. Flüssigkeiten und Gase sowie ein Verfahren zur Bestimmung derartiger Fehlstellen mit dieser Vorrichtung.

Zum Transport von fließfähigen Gütern, also Fluiden, wie Flüssigkeiten, Gase, Suspensionen von Flüssigkeiten und Feststoffen in Flüssigkeiten und Gasen werden Rohrleitungen zum Einsatz gebracht. Ein weiteres Einsatzgebiet von Rohrleitungen ist der Transport von Energie, wie bei Fernheizwerken erforderlich. Derartige Rohrleitungen werden über weite Strecken geführt, wobei der Abstand zwischen zwei Absperrorganen einige Kilometer, ja selbst hunderte Kilometer, betragen kann. Derartige Rohrleitungen können sowohl oberirdisch als auch unterirdisch angeordnet sein, wobei, so die Rohrleitung durch aride Gebiete führt, zusätzliche Schutzmaßnahmen, wie beispielsweise thermische Isolierungen, zweckmäßig sind.

Um die Funktionsfähigkeit einer Rohrleitung zu gewährleisten, ist es von besonderer Bedeutung, Fehlstellen und insbesondere Lecks festzustellen und gleichzeitig die genaue Lage zu ermitteln. Diese Fehlstellensuche ist einerseits von Bedeutung, um den Verlust an dem zu transportierenden Fluid so gering wie möglich zu halten und anderseits auch eine Schädigung der Umwelt durch das austretende Fluid zu vermeiden. Eine Schädigung kann nicht nur durch Kontaminierung eintreten, sondern wenn das Medium, beispielsweise Wasser, mit besonders hohem Druck austritt, kann eine Unterwaschung stattfinden, die bis zur Auflockerung des Grundes führen kann, so daß Gebäude zum Einsturz gelangen. Nicht nur Lecks, sondern auch Fehlstellen anderer Art, wie beispielsweise tiefe Korrosionsstellen, die in späterer Folge zu Löchern in der Wandung führen, als auch Knickstellen in der Rohrleitung, wie sie beispielsweise durch tektonisch bedingte Veränderungen des Untergrundes hervorgerufen werden können, sind für die Betriebssicherheit einer Rohrleitung von besonderem Interesse.

Aus den oben angeführten Gründen sind eine Reihe von Verfahren und Vorrichtungen zur Bestimmung von Leckstellen von Rohrleitungen entwickelt worden. Eines der ältesten Verfahren zur Bestimmung derartiger Leckstellen bedient sich der von einer Leckstelle ausgehenden und von dem austretenden Fluid verursachten akustischen Emissionen. Es ist seit langer Zeit bekannt, daß, bevor oberirdisch der Bruch oder ein Leck eines Wasserleitungsrohres auf der Straße zu beobachten ist, ein Rauschen durch das austretende Wasser im Untergrund erzeugt wird. Dieses Rauschen kann mit einem Hörrohr von einem Bedienungsmann aufgenommen werden, wobei in der Regel das Maximum des Geräuschpegels bestimmt wird und an dieser Stelle sodann beispielsweise die Straße aufgegraben wird, um zur Rohrleitung zu gelangen. Eine derartige Bestimmung der Leckstelle ist nur für kurze Strecken geeignet und setzt ein besonders gut geschultes Personal voraus.

In der US-A-4,289,019 wird ein Verfahren zur Bestimmung von Leckstellen in einer Rohrleitung beschrieben, wobei an einer unterirdisch verlegten Rohrleitung eine Vielzahl akustischer Sensoren angeordnet ist. Liegt nun zwischen zweien dieser Sensoren eine Leckstelle vor, so können die spezifischen von dieser Leckstelle ausgehenden in ihrer Frequenz unterschiedlichen Signale an den Meßstellen ermittelt werden, wobei gleichzeitig eine Meldung über den Eingang eines bestimmten Signales über Funk an den jeweiligen anderen Dedektor erfolgt, so daß gemäß der bekannten Schallgeschwindigkeit im Medium oder in der Rohrleitung eine Berechnung der Entfernung des Lecks von den jeweiligen Sensoren ermöglicht ist. Diese Bestimmungsmethodik wird davon abhängig, daß von einer Leckstelle von der Zeit abhängige charakteristische Signale abgegeben werden, die sich nicht in kurzer Folge wiederholen, da sonst die Gefahr besteht, daß nicht nur die Leckstelle, sondern verschiedene Stellen, die in systemabhängigen Abständen voneinander liegen, ermittelt werden.

In der US-PS-5,099,692 wird der mechanische Aufbau einer Vorrichtung, welche in eine Rohrleitung eingeführt werden kann und zur Inspektion der Innenfläche dient, beschrieben. Hiebei ist ein Sender und ein Sensor für die von der Rohrinnenseite reflektierten Wellen vorgesehen.

In der WO 86/06 165 wird eine weitere Vorrichtung zur Inspektion von Rohrinnenseiten beschrieben, wobei von einer im Rohrinneren bewegbaren Vorrichtung Signale über einen elektrischen Wandler in Licht umgesetzt werden, diese sodann über Glasfasern, welche von der Vorrichtung bei ihrer Bewegung in der Rohrleitung mitgezogen werden und außerhalb des Rohres enden, zu einem weiteren Wandler, welcher die Lichtsignale in elektrische Signale umwandelt, geführt. Eine Aufzeichnung der Signale erfolgt außerhalb der Rohrleitung.

In der weiters angeführten EP-A-0 282 687 wird eine Vorrichtung zum Fotografieren von Fehlstellen an der Innenseite von Rohrleitungen beschrieben. Die Vorrichtung weist weiters einen Mikrocomputer, eine Batterie als auch eine Meßeinrichtung für die zurückgelegte Wegstrecke auf. Sowohl die Wegstrecke als auch die Fehlstellen können gespeichert und wiedergegeben werden. Zur Bestimmung des Innendurchmessers werden von einem Ultraschallsender Signale abgegeben, die reflektiert von einem Sensor aufgenommen werden, wohingegen für eine fotografische Aufnahme zusätzlich eine Lichtquelle vorgesehen ist. Zur Bestimmung der Schweißnähte sind Wirbelstromsensoren vorgesehen.

In der FR-A-2,670.898 wird eine weitere Vorrichtung zur Bestimmung von Fehlstellen an der Innenseite von Rohrleitungen beschrieben. Diese Vorrichtung, die ebenfalls innerhalb der Rohrleitung bewegt wird, weist eine Vielzahl von Ultraschallsendern und Ultraschallempfängern auf, wobei entsprechende Steuer- und Aufzeicheneinrichtungen außerhalb der Rohrleitung angeordnet sind.

In der EP-A-0 451 649 werden ein weiteres Verfahren und eine weitere Vorrichtung zur Bestimmung von Schallquellen an Rohrleitungen beschrieben, wobei die Schallquelle durch eine Leckstelle in der Rohrleitung definiert ist. Der von der Leckstelle ausgehende Schall ist nicht monochromatisch, sondern er weist hörbaren Schall mit Frequenzen von 16 Hertz bis 16.000 Hertz und bis über den Hörschallbereich auf. Die Schallgeschwindigkeit ist nicht frequenzabhängig, sondern lediglich abhängig vom Medium, in welchem sich der Schall fortpflanzt. Kennt man die Geschwindigkeit, mit welcher sich ein Schall in einem bestimmten Medium fortbewegt, so kann die Wellenlänge bei gegebener Frequenz errechnet werden. Beispielsweise in Eisen pflanzt sich der Schall mit 4.800 m/sec fort, so ergibt das bei 16 Hertz eine Wellenlänge von 300 m. Wird nun an einem Ort bestimmt, in welcher Phase sich die Schwingung befindet, so kann damit die Lage des Lecks zusätzlich einer noch nicht bekannten Anzahl von Wellenlängen, also jeweils 300 m bestimmt werden. Zur Bestimmung der zusätzlichen vielfachen 300 m ist es nun lediglich erforderlich, die Phasenverschiebung bei anderen Frequenzen zu bestimmen, wobei die Anzahl der Bestimmungen davon abhängig ist, um ein Wievielfaches von 300 m sich die Leckstelle vom Meßort entfernt befindet. Bei diesem an sich physikalisch einfachen Verfahren sind eine hohe Anzahl von Bestimmungen vorgesehen, wobei, je höher die Genauigkeit der Ortsbestimmung ist, mit möglichst geringen Weglängen gerechnet werden muß, so daß die Anzahl der Bestimmungen mit unterschiedlichen Frequenzen unverhältnismäßig hoch ansteigt. Wie diesen Ausführungen zu entnehmen, liegt hier ein Verfahren vor, das einen besonders hohen Aufwand aufweist, wobei gleichzeitig, um die Anzahl der Messungen in einem technisch vertretbaren Rahmen zu halten, die Entfernungen von zwei Meßstellen, die aus Sicherheitsgründen vorzusehen sind, nicht besonders weit voneinander gehalten werden können. Liegen weiters zwischen den beiden Meßstellen mehr als eine Fehlstelle vor, so kann es zu Interferenzen führen, die unauswertbare überlagerte Schallwellen bedingen können.

In der US-4,051,714 wird eine Vorrichtung und ein Verfahren zur Bestimmung von Lecks in Rohrleitungen beschrieben, wobei ein an seinen beiden Enden abgedichteter Kolben in die Rohrleitung eingeführt und sodann durch den Fluidstrom als Kolben durch die Leitungen gedrückt wird. Tritt nun dieser Kolben über ein Leck in der Leitung, so wird über einen elektronischen Sensor ein unterschiedlicher Druck zwischen dem Bereich vor dem Leck und außerhalb des Kolbens festgestellt, welcher ein Signal an einen Verstärker abgibt, der von einer elektrischen Strom- und Spannungsquelle im Kolben versorgt wird. Das verstärkte Signal öffnet über ein Solenoid ein Ventil, wodurch eine Druckgasquelle geöffnet wird, die ihrerseits für eine Verlängerung des Kolbens Sorge trägt, wodurch an die Flüssigkeit in beide Richtungen Schallwellen abgegeben werden. Diese Schallsignale unterscheiden sich wesentlich von den Geräuschen des in der Rohrleitung fließenden Fluids. Im Kolben ist auch ein Recorder mit nicht angegebenen Aufgaben mit einer eigenen Stromquelle vorgesehen.

Die Entfernung der Leckstelle von einer Meßstelle wird nun so bestimmt, daß die Zeit, welche zwischen Abgabe des Signales und Eintreffen desselben an zwei vorbestimmten Orten beidseits zum Kolben vergeht, bestimmt wird.

In der US-3,561,256-A ist ein Molch beschrieben, der Räderpaare aufweist, die über den Bereich des Grundkörpers hinausgehen. Die Verbindung dieser Räder erfolgt über eine Gummischeibe mit dem eigentlichen Hauptkörper. Der Sensor ist keinesfalls vom Schall der Laufrollen geschützt. Dadurch, daß die Laufrollen über das Ende des Grundkörpers hinausgehen, können die Schallwellen den Sensor direkt beaufschlagen. Damit ist eine Konstruktion gegeben, die keinenfalls geeignet ist, eine exakte Bestimmung des Ortes der Störstelle zu erlauben.

Die vorliegende Erfindung geht von einem Stand der Technik aus, wie er durch die US-3,744,298-A gegeben ist. Diese Vorrichtung weist einen Drucker auf, welcher während der Reise in der Rohrleitung arbeitet. Um zu ermöglichen, daß eine Aufzeichnung über eine lange Strecke erfolgen kann, sind unterschiedliche Zeitabstände zwischen den einzelnen Druckvorgängen vorgesehen. Bei einer geringen Amplitude wird der Druck alle zwanzig Sekunden durchgeführt, wohingegen bei einer großen Amplitude der Druck alle zwei Sekunden erfolgt. Dadurch ist eine Ungenauigkeit bei der Bestimmung einer Fehlstelle gegeben.

Der vorliegenden Erfindung ist zur Aufgabe gestellt, eine besonders betriebssichere Vorrichtung und ein Verfahren zur Bestimmung von Fehlstellen in einer Rohrleitung zu schaffen. Die Bestimmung der Fehlstelle soll hiebei so erfolgen, daß entlang der Meßstrecke auch mehrere Fehlstellen bestimmt werden können, die einander nicht konkurrenzieren. Eine Inspektion der Rohrleitung soll über im wesentlichen beliebig lange Strecken durchführbar sein, wobei die Bestimmung der Orte der Fehlstellen mit einer Meßfahrt erfolgen soll und die Störung des Betriebes der Rohrleitung und auch ein Störgeräusch für einen Sensor besonders gering gehalten wird.

Die erfindungsgemäße Vorrichtung zur Bestimmung von Fehlstellen, insbesondere Lecks, einer Rohrleitung für Fluide, z. B. Flüssigkeiten, Gase, mit einem im Fluid anordenbaren und in Längsrichtung der Rohrleitung bewegbaren Trägerkörper, welcher in seiner, insbesondere gesamten, Längserstreckung größer ist als der kleinste Durchmesser der Rohrleitung, mit zumindest an einem Endbereich des Trägerkörpers angeordneten Schall-, insbesondere Ultraschallsensor, für die vom Fluid in/an der Fehlstelle erzeugten Schallwellen, welcher diese elektrisch umsetzt, gegebenenfalls einem elektrischen Verstärker für diese Signale, einer Einrichtung am Trägerkörper zur Bestimmung des vom Trägerkörper in der Rohrleitung zurückgelegten Weges und/oder Zeit, gegebenenfalls einer am Trägerkörper vorgesehenen Rolle, welche entsprechend ihren Umdrehungen Impulse abgibt und federnd gegen die Innenwandung der Rohrleitung gehalten ist und einer Aufzeichen- und Wiedergabeeinrichtung, insbesondere Ausgabeeinrichtung für die Signale und gegebenenfalls Impulse sowie zurückgelegten Weg und/oder Zeit und zumindest einer elektrischen Strom- und Spannungsquelle, besteht im wesentlichen darin, daß der Trägerkörper an beiden Endbereichen Laufrollen aufweist, welche schallgedämmt an diesem gehalten sind, und eine Störgeräusch-Abschirmung für den Sensor vorgesehen ist.

Dadurch, daß ein Trägerkörper in der Rohrleitung bewegbar ist und seine Dimensionierung so abgestimmt ist, daß keine Änderung der Orientierung während des Betriebes in der Rohrleitung erfolgen kann, ist die Lage des Sensors genau definiert. Der Verstärker ermöglicht, wie an sich bekannt, elektrische Signale zu verstärken, um die nachfolgende Aufzeichnung genauer durchzuführen. Mit der elektrischen Strom- und Spannungsquelle in dem Trägerkörper wird selbst für die Energieversorgung keine dauernde Verbindung des Trägerkörpers mit einer Strom- und Spannungsquelle außerhalb der Rohrleitung erforderlich. Ist der Sensor mit einem Schall-, insbesondere Ultraschallsensor, welcher die Schallwellen elektrisch umsetzt, aufgebaut, so können die Schallwellen, also auch die Ultraschallwellen, besonders leicht aufgezeichnet werden, wobei durch die Einrichtung zur Bestimmung des vom Trägerkörper in der Rohrleitung zurückgelegten Weges bzw. verweilten Zeit eine Corelation zwischen dem durch das fließende Fluid in der Rohrleitung durch die Fehlstelle abgegebenen Schalles und dem Weg gegeben ist, und die Aufzeichnungs-, Wiedergabe- und Ausgabeeinrichtung ermöglicht, daß der Meßund Aufzeichnungsvorgang von der eigentlichen örtlichen Bestimmung der Fehlstelle getrennt werden kann. Falls erwünscht, kann auch über eigene Sensoren die Temperatur und/oder der Druck im Medium aufgenommen und sodann aufgezeichnet werden, womit eine zusätzliche Ortsbestimmung möglich wird. Ist der Sensor im Bereich eines Endes des Trägerkörpers angeordnet und ist eine Schalldämmung zwischen dem sensortragenden Bereich und dem in Bewegungsrichtung des Trägerkörpers, insbesondere nach diesem angeordneten Bereich, vorgesehen, so kann ein sägezahnartiger Verlauf der Lautstärke für Signale, die von einer Fehlstelle ausgehen, erreicht werden, da die Schalldämmung, die von der Leckstelle ausgehenden Schallwellen nur gedämmt an den Sensor gelangen läßt. Ist die Schalldämmung in Bewegungsrichtung gesehen nach dem Sensor angeordnet, so steigt die Lautstärke der Schallwellen mit Annäherung des Sensors zur Fehlstelle und sinkt signifikant mit Passieren der Schalldämmung an der Fehlstelle. Weist der Trägerkörper in seinen beiden Endbereichen Laufrollen auf, so ist ein besonders ruhiger Lauf des Trägerkörpers gewährleistet, so daß eine einheitliche Geschwindigkeit des Trägerkörpers in der Rohrleitung gewährleistet sein kann. Ist zumindest eine Rolle, insbesondere Laufrolle, am Trägerkörper vorgesehen, welche entsprechend ihrer Umdrehungen Impulse an die Aufzeichen- und Wiedergabeeinrichtung abgibt und federnd gegen die Innenwandung der Rohrleitung gehalten ist, so kann der zurückgelegte Weg unabhängig von der Strömung in der Rohrleitung aufgezeichnet werden. Durch das Vorsehen einer Störgeräusch-Abschirmung für den Sensor kann derselbe insbesondere von Schallwellen, die durch das am Trägerkörper vorbeiströmende Medium bedingt werden, abgeschirmt sein.

Ist in Bewegungsrichtung des Trägerkörpers gesehen nach dem Sensor eine zur Wandung der Rohrleitung abragende Abschirmung aus dem zu messenden Schall dämmenden Material vorgesehen, so kann eine besonders starke sägezahnartige Aufzeichnung der Lautstärke des Schalles, welcher an den Sensor gelangt, erreicht werden.

Ist der Sensor mit einem Piezoaufnehmer, insbesondere einer Piezosäule, aufgebaut, so können die Schallwellen ohne zusätzliche elektrische Spannungsquelle in Wechselstrom umgesetzt werden.

Weist der Trägerkörper, insbesondere auf Armen, die am Trägerkörper angelenkt sind, Laufrollen auf, die federnd gegen die innere Rohrwandung haltbar sind, so ist einerseits ein besonders exakter Lauf des Trägerkörpers in der Rohrleitung gegeben, wobei andererseits periodisch wiederkehrende Schallsignale erzeugt werden, welche durch die Schweißnähte in Wechselwirkung mit den Laufrollen erzeugt werden. Da Schweißnähte in Rohrleitungen konstruktiv bedingt sind, u. zw. werden jeweils Rohrstücke mit einer bestimmten Maximallänge durch Querschweißnähte miteinander verbunden, kann durch diese Signale eine genaue Ortsbestimmung erfolgen, so daß eine Leckstelle in Abhängigkeit des Weges und somit auch der Schweißstellen angegeben werden kann.

Ist der Trägerkörper mit mehreren Teilkörpern gebildet, welche beweglich, insbesondere über einen flexiblen Schlauch, z. B. Metallfedernbalg, verbunden sind, so kann eine besonders große Beweglichkeit des Trägerkörpers quer zur Fortbewegungsrichtung erreicht werden, so daß auch große Richtungsänderungen, z. B. in Bögen, der Rohrleitung für den Trägerkörper durchführbar sind. Die Teilkörper können Rollen und/oder Laufrollen tragen, womit die Beweglichkeit besonders groß ist.

Ist die elektrische Strom- und Spannungsquelle in einem Teilkörper und Sensor, Aufnahme- und Wiedergabeeinrichtung, insbesondere Ausgabeeinrichtung, in zumindest einem weiteren Teilkörper angeordnet, so kann nach einer Reise des Trägerkörpers auf einfache Weise z. B. die Energieversorgung für eine weitere Reise durch Austausch einzelner Teilkörper erreicht werden.

Weist der Trägerkörper an dem dem Sensor abgewandten Endbereich einen Sender für Ultraschall und/oder elektromagnetische Wellen auf, und die Rohrleitungen Sensoren für die vom Sender, abgegebenen Signale auf, so kann das Passieren oder das Erreichen des Trägerkörpers an dem Ort des Sensors bestimmt werden.

Weist die Rohrleitung Schleusen zur Einführung und Entnahme des Trägerkörpers auf, so kann eine laufende Überprüfung der Rohrleitungen ohne wesentliche Störung des Transportes des Fluides erfolgen.

Weisen die Schleusen zur Einführung und Entnahme der Trägerkörper Sensoren für Ultraschall und/oder elektromagnetische Wellen auf, so kann der Beginn und das Ende der Reise des Trägerkörpers in der Rohrleitung aufgezeichnet werden, wobei gleichzeitig die Möglichkeit besteht, daß ein optisches oder akustisches Signal mit Erreichen des Trägerkörpers bei einem Sensor ausgelöst wird, so daß es keiner laufenden Überprüfung bedarf, um die Ankunft des Trägerkörpers an einem bestimmten Ort zu erwarten, sondern lediglich das optische oder akustische Signal beachtet werden muß.

Das erfindungsgemäße Verfahren zur Bestimmung von Fehlstellen, insbesondere Lecks in einer ein Medium führenden Rohrleitung, wobei ein Trägerkörper in und entlang der Rohrleitung im und gegebenenfalls vom Medium bewegt wird, und von einem Sensor Signale aufgenommen werden, welche in einem elektrischen Verstärker verstärkt werden, besteht im wesentlichen darin, daß die analogen Signale aus dem Sensor verstärkt, die verstärkten Wechselstromsignale in einem Gleichrichter in ein Gleichstromsignal und anschließend in einem Analog-Digitalwandler in ein Digitalsignal umgewandelt und sodann in zeitlich getakter Folge in einer Aufnahme- und Wiedergabeeinrichtung, insbesondere Ausgabeeinrichtung, gespeichert werden. Ein derartiges Verfahren erlaubt einerseits, daß der Trägerkörper, welcher das spezifische Gewicht des Mediums aufweisen, leichter oder schwerer sein kann, zumindest zeitweise vom bewegten Medium in der Rohrleitung entlang bewegt werden kann, wobei gleichzeitig eine Umsetzung der vom Sensor aufgenommenen Signale in eine besonders leicht speicherbare Form erreicht wird, wobei die zeitlich getakte Folge eine eindeutige Bestimmung der Zeit oder auch des Weges des Trägerkörpers in der Rohrleitung erlaubt.

Werden die Signale vor ihrem Eintritt in den Gleichrichter entsprechend ihrer Frequenz gefiltert, so kann die Anzahl der zu speichernden Daten ausgewählt gering gehalten sein, so daß signifikante Aussagen in einfacher Weise möglich sind.

Werden nur zwei unterschiedliche Frequenzbereiche der aus dem Sensor kommenden Signale verstärkt, so besteht die Möglichkeit, daß Signale, die von einer Störstelle, z. B. Leck, in der Rohrleitung ausgehen, und andere Signale, z. B. Markersignale, Druck und Temperatur, die wegabhängig sind, zur Aufzeichnung gelangen, so daß eine besonders einfache Auswertung der Aufzeichnung ermöglicht ist.

Werden über einen Mikroprocessor, die in digitaler Form vorliegenden Signale in einem Halbleiterspeicher abgelegt und abgefragt, so kann auf besonders einfache und sichere Art und Weise eine Speicherung und Wiedergabe der Signale erfolgen.

Im folgenden wird die Erfindung anhand der Zeichnungen näher erläutert.

Es zeigen:
Fig. 1 eine Rohrleitung im Längsschnitt mit Trägerkörper,
Fig. 2 eine Rohrleitung im Querschnitt mit Trägerkörper,
Fig. 3 eine weitere Ausbildung des Trägerkörpers gemäß Fig. 1,
Fig. 4 in schematischer Darstellung eine Rohrleitung mit Schleusen,
Fig. 5 ein Blockschaltbild für eine Einrichtung zur Aufzeichnung und Wiedergabe der Signale,
Fig. 6 die Stromversorgung für die Vorrichtung gemäß Fig. 5,
Fig. 7 einen Ultraschallsender in schematischer Darstellung,
Fig. 8 und 9 Schallsensoren in schematischer Darstellung und die
Fig. 10 bis 13 Diagramme aufgezeichneter Signale.

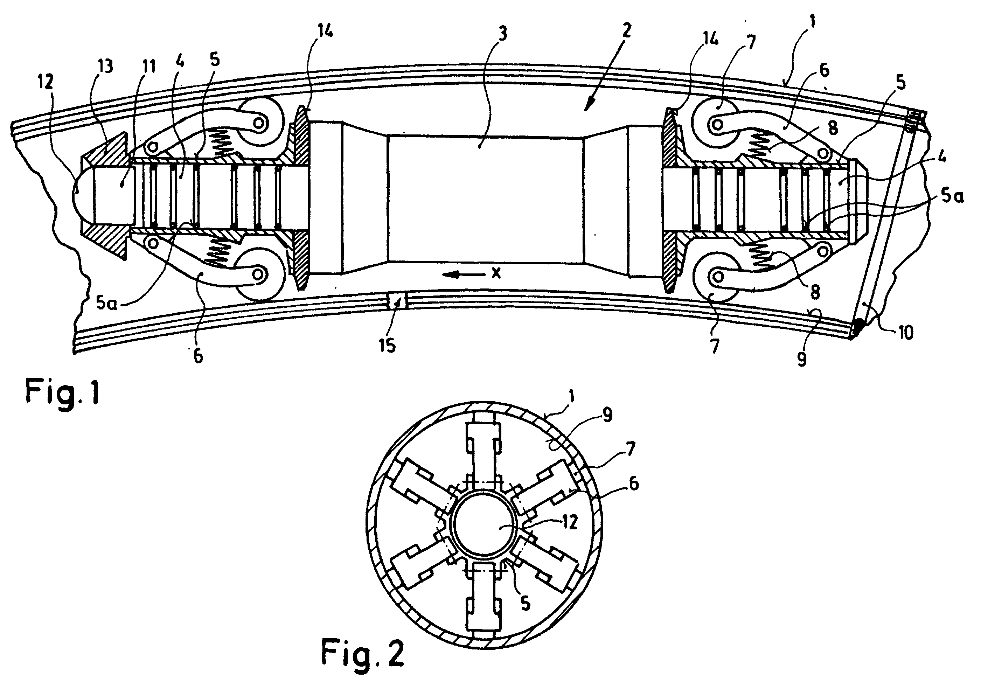

In der in Fig. 1 im Längsschnitt dargestellten Rohrleitung 1 fließt ein Medium in Bewegungsrichtung x. In der Rohrleitung ist ein Trägerkörper 2 angeordnet, welcher vom fließenden Medium durch die Rohrleitung bewegt wird. Ein zusätzlicher Antrieb od. dgl. ist nicht erforderlich. Der Durchmesser der Rohrleitung beträgt 114,3 mm. Der Trägerkörper weist einen rotationssymmetrischen Druckbehälter 3 auf, welcher sowohl die Elektronik als auch eine elektrische Strom- und Spannungsquelle umschließt. Die Länge des rotationssymmetrischen Druckbehälters beträgt 156 mm. An den Endbereichen des Druckbehälters 3 sind zylindrische Rohrstücke 4 angeordnet, die jeweils mit einer Hülse 5 umgeben sind, an welchen Hülsen Arme 6 angelenkt sind, wobei an ihrem anderen freien Ende Rollen 7 gelagert sind. Über Schraubenfedern 8, die sich jeweils auf der Hülse 5 abstützen, werden die Arme 6 und damit die Rollen 7 gegen die Innenwandung 9 federnd gehalten.

Bewegen sich die Rollen 7 über Schweißnähte 10, welche Inhomogenitätsstellen darstellen, werden entsprechende akustische Signale abgegeben. Am vorderen Ende des Trägerkörpers ist ein Sensor 11 für Schall angeordnet, welcher gegenüber dem Medium mit einer Teilkugel 12 abgedichtet ist, die den auf die Teilkugel auftreffenden Schall an den Sensor weiterleitet. Zur Verringerung des Strömungswiderstandes und zur Schallverstärkung und Abschirmung ist der Sensor von einem kegelstumpfartigen Schirm 13 umgeben. Der Sensor 11 ist von dem übrigen metallischen Trägerkörper 2 durch Abschirmungen 14 aus Polyurethan getrennt. Diese Abschirmungen 14 haben noch zusätzlich die Funktion, den Strömungswiderstand des Trägerkörpers zu erhöhen, so daß ein besserer Transport des Trägerkörpers erfolgt. Die Abschirmung 13, welche den Strömungswiderstand im Bereich des Sensors verringern soll, hat die Aufgabe, zusätzliche Störgeräusche, wie sie durch Wirbelbildung, beispielsweise bei den Armen und Rollen, bedingt sein können, zu verhindern. Wie aus Fig. 1 besonders deutlich ersichtlich, ist in der Rohrleitung 1 ein Leck 15 vorgesehen, wobei durch das austretende Medium Schall emittiert wird. Dieser Schall wird in der dargestellten Position des Trägerkörpers durch die Abschirmung 14 bereits wesentlich abgeschwächt, bevor derselbe auf den Sensor trifft. Ist hingegen das Leck noch in Bewegungsrichtung gesehen vor dem Sensor angeordnet, so liegt eine wesentlich größere Amplitude der Schallschwingung vor. Im Trägerkörper können auch Sensoren für elektromagnetische Wellen, Druck und Temperatur vorgesehen sein, wobei die entsprechenden Signale ebenfalls aufgezeichnet werden.

Bei der Darstellung in Fig. 2 ist die Rohrleitung 1 im Querschnitt dargestellt. Vom Trägerkörper 2 ist der Schirm 13 demontiert, so daß die Teilkugel 12 und die Hülse 5 besonders deutlich sichtbar sind. Die Hülse trägt, wie bereits ausgeführt, an ihrem Umfang gleichmäßig verteilt sechs Arme 6, welche die Rollen 7 über die Federn 8 gegen die Innenwandung 9 der Rohrleitung 1 drücken.

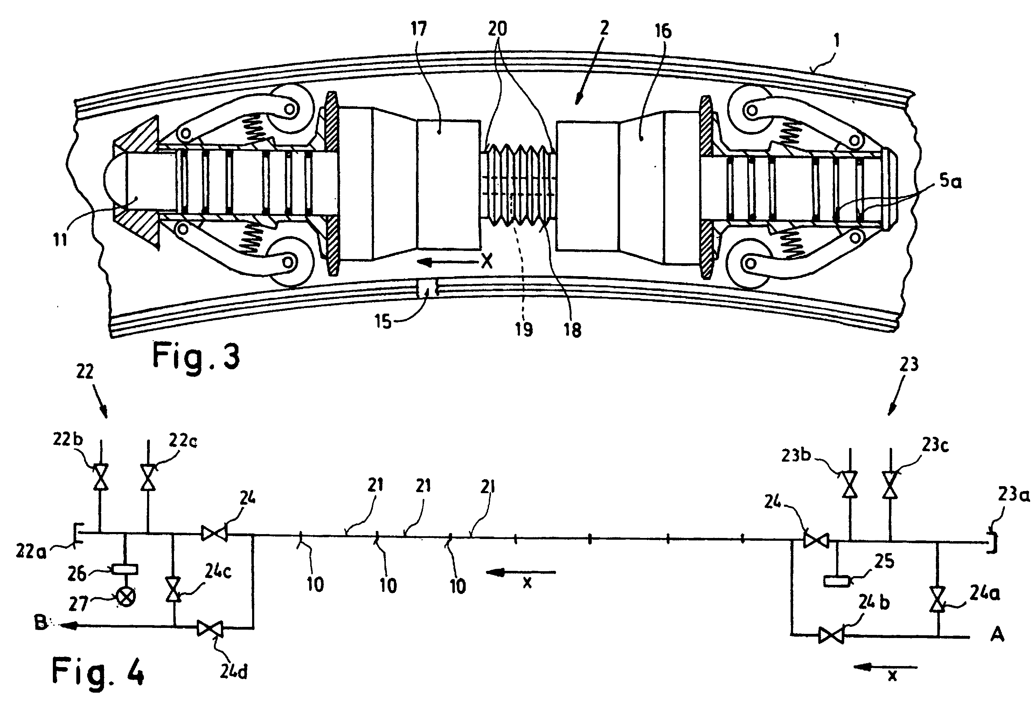

Der in Fig. 3 dargestellte Trägerkörper 2 in einer Rohrleitung 1 ist aus zwei Teilkörpern 16 und 17 aufgebaut, die über einen fluiddichten Federnbalg 18 aus Stahl miteinander gelenkig verbunden sind. In dem Teilkörper 16 ist die elektrische Strom- und Spannungsquelle angeordnet, wohingegen im Teilkörper 17 der Sensor 11 mit Verstärker, Aufnahme-, Wiedergabe- und Ausgabeeinrichtung versehen ist. Die Hülse 5 ist über Rundschnüre oder 0-Ring 5a schallgedämmt am zylindrischen Rohrstück 4 gehalten. Über die Leitung 19 im Federnbalg 18 wird die elektrische Energie vom Teilkörper 16 in den Teilkörper 17 geleitet. Ist eine wiederaufladbare Strom- und Spannungsquelle im Teilkörper 16 vorgesehen, so kann eine der Schraubverbindungen 20 gelöst werden, wonach die Leitung 19 getrennt wird, womit eine Trennung der beiden Teilkörper 16 und 17 durchgeführt ist. Zum schnellen Einsatz, ohne daß eine Wiederaufladung der Strom- und Spannungsquelle erforderlich ist, muß nur ein anderer Teilkörper 16 eingesetzt werden und der Federnbalg und die Leitung wieder vervollständigt werden. Wie auch klar ersichtlich, kann durch das Vorsehen einer flexiblen Verbindung eine entsprechende bessere Kurvengängigkeit des Tragkörpers erreicht werden. Anstelle des Federnbalges können beispielsweise auch Kardangelenke oder Kugelgelenke vorgesehen sein. In bestimmten Fällen ist auch eine Verbindung der beiden Teilkörper durch andere flexible Elemente, also eine Schraubenfeder, aber auch ein Glasfiberstab od. dgl., vorgesehen.

In Fig. 4 ist eine Rohrleitung 1 schematisch dargestellt, die aus einzelnen Rohrstücken 21 besteht, die durch Schweißnähte 10 miteinander verbunden sind. Die Rohrleitung weist Schleusen 22 und 23 auf. In Strömungsrichtung x gesehen vor und nach den Schleusen sind jeweils Schieber 24 angeordnet, so daß bei geschlossenen Schiebern 24 der Tragkörper über die Schleuse 23 bzw. 22 eingebracht und entnommen werden kann. Unterhalb der Schleuse 23 ist ein Sender 25 für Ultraschall oder elektromagnetische Wellen angeordnet, wohingegen unterhalb der Schleuse 22 ein Sensor 26 für Ultraschall oder elektromagnetische Wellen angeordnet ist, der bei Erreichen des Trägerkörpers auf den von dem Trägerkörper ausgesandten Signal einen optischen Signalgeber 27 betätigt. Im vorliegenden Fall ist der optische Signalgeber eine Glimmlampe. Die Schieber werden zur Entnahme des Trägerkörpers geschlossen.

Das Fluid fließt von A nach B. Zur Öffnung der Schleuse 23 wird der bei geschlossenen Ventilen 24 und 24a der Schraubverschluß 23a gelöst, wobei das Medium zuerst über das Ventil 23b abgelassen wurde und sodann der Trägerkörper eingeführt, worauf der Schraubverschluß wieder geschlossen wird. Sodann wird das Ventil 24a geöffnet und über Ventil 23c entlüftet. Bei geschlossenem Ventil 24b und geöffnetem Ventil 24 wird der Trägerkörper vom Medium in die Rohrleitung eingetragen. Gelangt der Trägerkörper zur Schleuse 22, so sind die Ventile 24 und 24c geöffnet und die Schleuse 22 mit Schraubverschluß 22a sowie Ventil 24d geschlossen. Ist der Trägerkörper in der Schleuse 22 angelangt, werden die Ventile 24 und 24c geschlossen und das Ventil 24d geöffnet, so daß das Medium ununterbrochen fließen kann. Zur Entnahme des Trägerkörpers wird über das Ventil 22b das Medium abgelassen, der Schraubverschluß 22a geöffnet. Sodann wird das Entlüftungsventil 22c und das Ventil 24 geöffnet bis die Schleuse geflutet ist, worauf das Entlüftungsventil 22c geschlossen wird, womit der Betriebszustand wiederhergestellt ist.

Das Medium in einer Rohrleitung steht bei Transport desselben unter Druckbeaufschlagung. Erst durch diese Druckbeaufschlagung kann das Medium, wenn es über eine Inhomogenitätsstelle gleitet oder über ein Leck aus der Leitung austritt, zur Schallemission führen. Je regelmäßiger eine derartige Störstelle ist, umso geringer ist der Schallpegel, welcher von dieser Störstelle ausgeht. Eine zylindrische Bohrung stellt ein Leck dar, das besonders geringe Schallwellen verursacht. Steht beispielsweise Preßluft unter einem Druck von 45 kPa und tritt durch eine zylindrische Bohrung mit einem Durchmesser von 0,25 mm und einer Wanddicke der Rohrleitung von 5 mm aus, so wird ein Schall in einer Lautstärke von 30 dB über dem Grundrauschen emittiert. Liegt Wasser als Medium vor, so kann ein anderes Beispiel angeführt werden. Bei einer Rohrleitung bei einer Wanddicke von 3 mm und einer zylindrischen Bohrung mit einem Durchmesser von 2 mm und einem Druck von 100 kPa wird ein Schall mit einer Lautstärke von 36 dB über dem Grundrauschen abgegeben. Je höher der Druck ist, unter welchem das Medium steht, umso höher liegt die Energie und das Maximum der Frequenz der ausgestrahlten Schallwellen. Üblicherweise liegt die Frequenz des breitbandigen Rauschens vom Hörschallbereich bis in den Ultraschallbereich, also bis zu einigen hundert Kilohertz. Der bevorzugte Bereich zum Messen liegt in der Frequenz zwischen 20 kHz bis 100 kHz. Je höher die Frequenz ist, umso stärker ist die Dämpfung im Medium, mit welcher die Signale, welche von einer Inhomogenitätsstelle ausgehen, abgeschwächt werden.

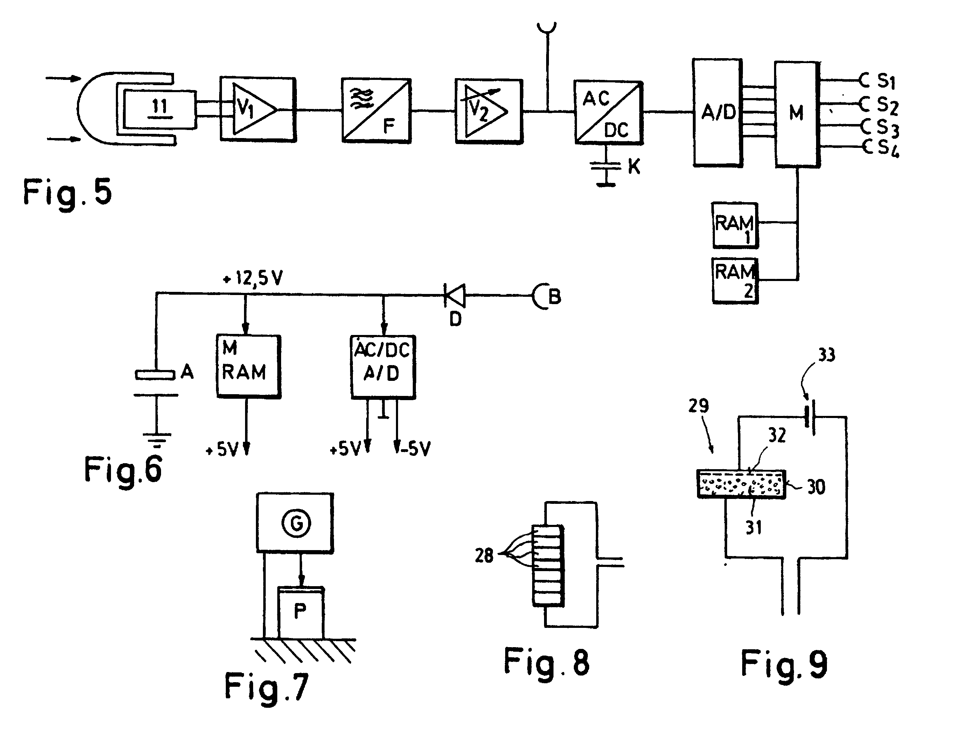

Die Funktionsweise wird nun anhand der Fig. 5 näher erläutert. Der Sensor 11 besteht aus einem Piezo-Kristall-Aufnehmer aus Quarz mit einer Resonanzfrequenz von 45 kHz. Der hier entstehende elektrische Wechselstrom gelangt über den Breitbandverstärker V₁ in das Bandpaßfilter F für 45 kHz und wird sodann in variabel einstellbarem Verstärker V₂ zwischen 6 dB und 20 dB verstärkt. Dieses Signal wird sodann im Gleichrichter AC/DC gleichgerichtet, wobei eine Zeitkonstante über den Kondensator K eingeführt wird, womit die Signale zeitlich getaktet werden. Die in zeitlichen Abständen einlangenden Signale werden sodann in dem Analog-Digitalwandler A/D in digitale Größen umgewandelt, die anschließend über den Mikroprocessor M, der ein Single-Chip-Processor ist, in den beiden Datenspeichern RAM₁ und RAM₂ mit jeweils 128 kByte abgelegt werden. Über die Schnittstelle S₁ wird dem Mikroprocessor der Befehl zum Start gegeben, wohingegen über die Schnittstelle S₂ Daten eingelesen werden können, also Einstellen der Meßrate und Einstellen der Schwellenwerte und über S₃ die Daten aus den Datenspeichern RAM₁ und RAM₂ in einen Datenspeicher (nicht dargestellt) eines Computers eingelesen werden können. Die in Laufrichtung x gesehen hinteren Rollen 7 können Bestandteil eines Odometerlaufwerkes bilden, die ihre Umdrehungsimpulse über die Schnittstelle S₄ über den Mikroprocessor in die Speicher RAM₁ bzw. RAM₂ ablegen.

In Fig. 6 ist schematisch die Stromversorgung dargestellt, wobei der Strom über die Buchse B, die Rückstromdiode D, in dem Nickelkadmiumakkumulator A gespeichert wird. Dieser Akkumulator weist eine Betriebsspannung von 12 Volt auf und eine Speicherfähigkeit von 280 mAh. Der Datenspeicher RAM und der Mikroprocessor M weisen eine Eingangsspannung von 12,5 Volt und eine Ausgangsspannung von 5 Volt auf, wohingegen der Analogteil AC/DC und A/D eine Eingangsspannung von 12,5 Volt aufweist und eine Ausgangsspannung von +5 Volt und -5 Volt besitzt.

Der in Fig. 7 schematisch dargestellte Ultraschallsender weist einen Rechteckgenerator G mit Ausgangsfrequenz von 300 kHz auf, mit welcher das Piezo-Kristall P aus Quarz beaufschlagt wird, so daß eine Ultraschallschwingung mit 300 kHz abgegeben wird.

In Fig. 8 ist schematisch eine Säule aus Piezo-Kristallen 28 dargestellt, welche als Sensor zur Aufnahme von Schall- und Ultraschallschwingungen dienen kann, wohingegen in Fig. 9 in schematischer Darstellung ein Mikrophon 29 mit Dose 30, Kohlekörnern 31 und Membran 32 und Stromquelle 33 dargestellt ist. Durch die Schallschwingungen, welche auf die Membran gelangen, werden die Kohleteilchen weniger stark oder stärker gegeneinander gedrückt, so daß ein ändernder Widerstand entsteht, welcher zu ändernde Stromstärke des durch das Mikrophon hindurchgeleiteten Stromes führt.

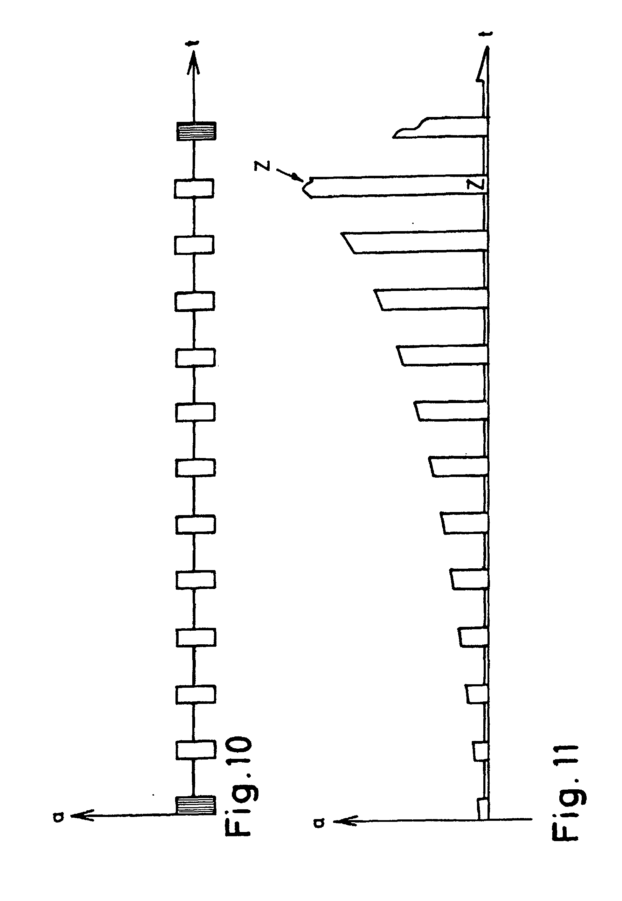

Die Arbeitsweise wird nun im folgenden beschrieben. Die beiden Schieber 24 werden in Schließstellung verbracht und es wird sodann die Schleuse 23 geöffnet und der Trägerkörper eingebracht. Vor dem Einbringen wird die Taktrate und die Meßfrequenzen über den Mikroprocessor M und den Kondensator K festgelegt. Bei einer Strömungsgeschwindigkeit, beispielsweise von 1 m/sec, ist eine Meßrate von 10 Hz ausreichend, da pro Meter 10 Messungen durchgeführt werden. Mit einer Speicherkapazität für die einzelnen Amplitudenwerte von 256.000 von RAM₁ und RAM₂ ergibt sich eine maximale Laufzeit von 7 Stunden. Es wird die Schleuse 23 geschlossen und die Schieber 24 werden geöffnet. Der Ultraschallsender 25 ergibt ein mit 3 Hz getaktes breitbandiges Rauschen mit 48 kHz Resonanz in der Rohrleitung 1. Damit wird der Start und gegebenenfalls das Verlassen des Trägerkörpers von der Schleuse 23 eindeutig identifiziert. Ein derartiges Signal gemäß Fig. 10 weist eine gleichförmige Amplitude gegen die Zeit auf, wobei eine Einschaltdauer von 120 msec und eine Ausschaltdauer von 240 msec vorgesehen ist, so daß eine besonders eindeutige Identifizierung ermöglicht ist. Die in den Speichern RAM₁ und RAM₂ gespeicherten Werte werden über den Mikroprozessor M abgefragt und in einer Datenverarbeitungsanlage herkömmlicher Art abgelegt und über einen Schreiber oder Bildschirm zeichnerisch wiedergegeben.

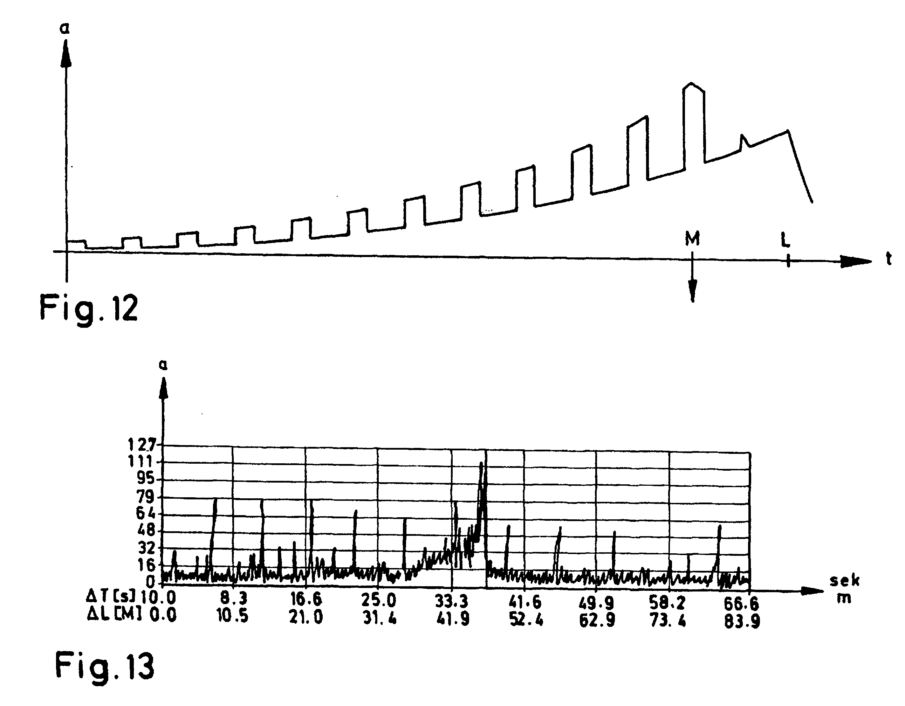

Bei dem in Fig. 11 dargestellten Amplituden sind Blöcke mit ansteigender Amplitude dargestellt, welche die Annäherung des Sensors 11 des Trägerkörpers zur Markerposition Z wiedergeben. Passiert nun der Sensor die Markerposition, so nimmt die Amplitude wieder ab. Das abrupte Abnehmen wird durch die Abschirmung 14 erreicht, welche sich bei Weiterbewegung des Trägerkörpers zwischen Sensor und Leckstelle befindet. Die zwischen den einzelnen Balken dargestellten niedrigen Balken symbolisieren das Grundrauschen der gesamten Elektronik.

In Fig. 12 ist ein Diagramm der Amplituden a gegen die Zeit dargestellt, wenn eine Leckstelle in Nähe eines Ultraschallsenders M ist. Dies kann entweder in der Nähe einer Schleuse sein oder auch bei oberirdisch angelegten Rohrleitungen zur zusätzlichen leichteren Ortung von Leckstellen L angebracht werden. Wie aus Fig. 12 ersichtlich, nehmen die einzelnen über die Hüllkurve herausragenden Amplitudenblöcke stark zu, wobei die einzelnen Amplitudenblöcke durch den Ultraschallsender bedingt sind. Mit Passieren des Sensors bei dem Ultraschallsender an der Stelle M nehmen die Amplitudenblöcke unmittelbar ab, wohingegen die Grundlinie für die Amplituden a weiter zunehmen, da das Maximum bei L, das der Fehlstelle entspricht, noch nicht erreicht ist, nach welcher die Amplituden rasch abnehmen. Durch den Ultraschallsender kann somit eine genaue Markierung eines bestimmten Ortes im zeitlichen Verlaufes des Diagrammes zur Darstellung der Amplituden erhalten werden. Durch die Pulsung des Markersignales ist eine eindeutige Unterscheidung von Leckagen- und Markergeräuschen möglich.

Bei dem in Fig. 13 dargestellten Diagramm wurde die Amplitude gegen die Zeit bzw. gegen die Wegstrecke aufgetragen. Die Bestimmung der Wegstrecke erfolgt derart, daß am Beginn und am Ende jeweils ein einheitliches Signal durch einen Ultraschallsender abgegeben wird, das jenem der Fig. 10 entspricht. Weiters ist die Anzahl der Meßstellen über die getakten Signale bekannt. So wird beispielsweise alle Zehntel Sekunden eine Messung vorgenommen. Ist die Gesamtlänge der Meßstrecke bekannt, so kann von der Gesamtzeit, welche benötigt wurde, daß der Trägerkörper die Rohrleitung passiert, die mittlere Geschwindigkeit errechnet werden, wodurch sich für jeden einzelnen Meßpunkt der Ort der Messung ergibt.

In Fig. 13 sind in regelmäßigen Abständen in Richtung der Amplitude a Doppelamplitudenausschläge zwischen den Werten 48 und 80 leicht erkennbar. Diese Doppelamplituden entsprechen den Schlägen der vorderen und hinteren Rollen des Trägerkörpers, wenn dieselben nacheinander auf die Schweißnaht auftreffen. Die Abstände dieser Doppelamplituden entsprechen somit den Längen der Rohrstücke. Besonders deutlich ist der stetige Anstieg der Kurve, wenn man die Doppelamplituden unberücksichtigt läßt, zu erkennen, wobei der abrupte Abfall der Amplitudenkurve im Bereich zwischen 33,3 sec und 41,6 sec signifikant dargestellt ist. Dieser Abfall der Amplitude entspricht einem Leck. Das Diagramm gemäß Fig. 13 wurde an einer 200 m langen Teststrecke aufgenommen, wobei lediglich der Bereich von 0 m bis 83,9 m dargestellt ist. Das in der Rohrleitung fließende Wasser hatte einen Druck von 6 bar. Als Fehlstelle war eine zylindrische Bohrung mit 1 mm vorgesehen.

## Patentansprüche

1. Vorrichtung zur Bestimmung von Fehlstellen, insbesondere Lecks (15), einer Rohrleitung (1) für Fluide, z. B. Flüssigkeiten, Gase, mit einem im Fluid anordenbaren und in Längsrichtung der Rohrleitung bewegbaren Trägerkörper (2), welcher in seiner, insbesondere gesamten, Längserstreckung größer ist als der kleinste Durchmesser der Rohrleitung (1), mit zumindest an einem Endbereich des Trägerkörpers (2) angeordneten Schall-, insbesondere Ultraschallsensor (11), für die vom Fluid in/an der Fehlstelle erzeugten Schallwellen, welcher diese elektrisch umsetzt, gegebenenfalls einem elektrischen Verstärker für diese Signale, einer Einrichtung am Trägerkörper (2) zur Bestimmung des vom Trägerkörper (2) in der Rohrleitung zurückgelegten Weges und/oder Zeit, gegebenenfalls einer am Trägerkörper (2) vorgesehenen Rolle, welche entsprechend ihren Umdrehungen Impulse abgibt und federnd gegen die Innenwandung (9) der Rohrleitung gehalten ist und einer Aufzeichen- und Wiedergabeeinrichtung, insbesondere Ausgabeeinrichtung für die Signale und gegebenenfalls Impulse sowie zurückgelegten Weg und/oder Zeit und zumindest einer elektrischen Strom- und Spannungsquelle, ***dadurch gekennzeichnet*, daß** der Trägerkörper (2) an beiden Endbereichen Laufrollen (7) aufweist, welche schallgedämmt (5a) an diesem gehalten sind, und eine Störgeräusch-Abschirmung (13) für den Sensor (11) vorgesehen ist.

2. Vorrichtung zur Bestimmung von Fehlstellen nach Anspruch 1, ***dadurch gekennzeichnet,* daß** in Bewegungsrichtung (x) des Trägerkörpers (2) gesehen nach dem Sensor (11) eine zur Wandung der Rohrleitung abragende Abschirmung (14) vorgesehen ist, die den zu messenden Schall dämmt.

3. Vorrichtung zur Bestimmung von Fehlstellen nach Anspruch 1 oder 2, ***dadurch gekennzeichnet,* daß** der Sensor (11) mit einem Piezo-Aufnehmer, insbesondere Piezo-Säule, aufgebaut ist.

4. Vorrichtung zur Bestimmung von Fehlstellen nach Anspruch 1, 2 oder 3, ***dadurch gekennzeichnet,* daß** der Trägerkörper (2), insbesondere auf Armen (6), die am Trägerkörper (2) angelenkt sind, Laufrollen (7) aufweist, die federnd gegen die innere Rohrwandung (9) haltbar sind.

5. Vorrichtung zur Bestimmung von Fehlstellen nach einem der Ansprüche 1 bis 4, ***dadurch gekennzeichnet,* daß** in an sich bekannter Weise der Trägerkörper (2) mit mehreren Teilkörpern (16, 17) ausgebildet ist, welche beweglich, insbesondere über einen flexiblen Schlauch (18), z. B. Metallfedernbalg, verbunden sind, wobei gegebenenfalls zumindest ein Teilkörper Rollen trägt.

6. Vorrichtung zur Bestimmung von Fehlstellen nach Anspruch 5, ***dadurch gekennzeichnet,* daß** die elektrische Strom- und Spannungsquelle in einem Teilkörper (16) und Sensor (11), Aufnahme- und Wiedergabeeinrichtung in zumindest einem weiteren Teilkörper (17) des Trägerkörpers (2) angeordnet ist/sind.

7. Vorrichtung zur Bestimmung von Fehlstellen nach einem der Ansprüche 1 bis 6, ***dadurch gekennzeichnet,* daß** der Trägerkörper (2) an dem den Sensor (11) abgewandten Endbereich einen Ultraschallsender und/oder Sender für elektromagnetische Wellen aufweist, und die Rohrleitung (1) Sensoren für die vom Sender abgegebenen Ultraschallsignale (26) und oder elektromagnetische Wellen aufweist.

8. Vorrichtung zur Bestimmung von Fehlstellen nach einem der Ansprüche 1 bis 7, ***dadurch gekennzeichnet,* daß** die Rohrleitung (1) Schleusen (22, 23) zur Einführung und Entnahme des Trägcrkörpers (2) aufweist.

9. Vorrichtung zur Bestimmung von Fehlstellen nach Anspruch 8, ***dadurch gekennzeichnet,* daß** im Bereich zumindest einer Schleuse (22) zumindest ein Sensor (26) für Ultraschall und /oder elektromagnetische Wellen angeordnet ist.

10. Verfahren zur Bestimmung von Fehlstellen, gegebenenfalls Lecks, in einer ein Medium führenden Rohrleitung mit einer Vorrichtung nach einem der Ansprüche 1 bis 9, wobei ein Trägerkörper in und entlang der Rohrleitung im und gegebenenfalls vom Medium bewegt wird, und von einem Sensor Signale aufgenommen werden, welche in einem elektrischen Verstärker verstärkt werden, wobei die analogen Signale aus dem Sensor verstärkt, die verstärkten Wechselstromsignale in einem Gleichrichter in ein Gleichstromsignal und anschließend in einem Analog-Digitalwandler in ein Digitalsignal umgewandelt und sodann in zeitlich getakter Folge in einer Aufnahme- und Wiedergabeeinrichtung, insbesondere Ausgabeeinrichtung, gespeichert werden.

11. Verfahren zur Bestimmung von Fehlstellen nach Anspruch 10, wobei die Signale vor ihrem Eintritt in den Gleichrichter entsprechend ihrer Frequenz gefiltert werden.

12. Verfahren zur Bestimmung von Fehlstellen nach Anspruch 10 oder 11, wobei nur zwei unterschiedliche Frequenzbereiche, der aus dem Sensor kommenden Signale verstärkt werden.

13. Verfahren zur Bestimmung von Fehlstellen nach Anspruch 10, 11 oder 12, wobei die Signale über einen Mikroprocessor in digitaler Form in einem Halbleiterspeicher abgelegt werden.

## Claims

1. Device for location of defects, in particular leaks (15), in a pipeline (1) for fluids, e.g. liquids, gases, with a carrier body (2) which can be located in the fluid and moved in the longitudinal direction of the pipeline and in its longitudinal extension, in particular its entire longitudinal extension, is greater than the smallest diameter of the pipeline (1), with an acoustic sensor, in particular ultrasound sensor (11) located at least in one end area of the carrier body (2) for the soundwaves produced by the fluid in/at the defect, which sensor converts these electrically, possibly an electrical amplifier for these signals, a device on the carrier body (2) for measurement of the time and/or distance covered by the carrier body (2) in the pipeline, possibly a roller which is provided on the carrier body (2) and emits pulses according to its revolutions and is held resiliently against the internal wall (9) of the pipeline, and a recording and reproduction device, in particular output device for the signals and possibly pulses and distance covered and/or time and at least one electrical current and voltage source, **characterised in that** in both end areas the carrier body (2) exhibits rollers (7) which are mounted on the latter with acoustic insulation (5a), and a disturbing noise shield (13) is provided for the sensor (11).

2. Device for location of defects according to claim 1, **characterised in that** a shield (14) which projects towards the wall of the pipeline and insulates the sound to be measured is provided after the sensor (11) in the direction of movement (x) of the carrier body (2).

3. Device for location of defects according to claim 1 or 2, **characterised in that** the sensor (11) is constructed with a piezoelectric pickup, in particular a piezoelectric pile.

4. Device for location of defects according to claim 1, 2 or 3, **characterised in that** the carrier body (2) exhibits rollers (7) which can be held resiliently against the internal pipe wall (9), in particular on arms (6) which are articulated on the carrier body (2).

5. Device for location of defects according to one of claims 1 to 4, **characterised in that** in a manner known per se the carrier body (2) is embodied with a plurality of part bodies (16, 17) which are connected movably, in particular by means of a flexible tube (18), e.g. metal spring bellows, in particular at least one part body carrying rollers.

6. Device for location of defects according to claim 5, **characterised in that** the electrical current and voltage source is arranged in one part body (16) and the sensor (11) and the recording and reproduction device are arranged in at least one other part body (17) of the carrier body (2).

7. Device for location of defects according to one of claims 1 to 6, **characterised in that** in the end area remote from the sensor (11) the carrier body (2) exhibits an ultrasound transmitter and/or transmitter for electromagnetic waves, and the pipeline (1) exhibits sensors for the ultrasound signals (26) and/or electromagnetic waves emitted by the transmitter.

8. Device for location of defects according to one of claims 1 to 7, **characterised in that** the pipeline (1) exhibits locks (22, 23) for introduction and removal of the carrier body (2).

9. Device for location of defects according to claim 8, **characterised in that** at least one sensor (26) for ultrasound and/or electromagnetic waves is arranged in the area of at least one lock (22).

10. Method for location of defects, possibly leaks, in a pipeline conveying a medium with a device according to one of claims 1 to 9, whereby a carrier body is moved in and along the pipeline in and possibly by the medium, and a sensor picks up signals which are amplified in an electrical amplifier, whereby the analogue signals from the sensor are amplified, the amplified alternating current signals are converted into a direct current signal in a rectifier and then into a digital signal in an analogue-digital converter and then stored in chronological order in a recording and reproduction device, in particular an output device.

11. Method for location of defects according to claim 10, whereby the signals are filtered according to their frequency before they pass into the rectifier.

12. Method for location of defects according to claim 10 or 11, whereby only two different frequency ranges of the signals coming from the sensor are amplified.

13. Method for location of defects according to claim 10, 11 or 12, whereby the signals are stored in digital form in a semi-conductor memory by means of a microprocessor.

## Revendications

1. Dispositif pour détecter des défauts, en particulier des fuites (15) dans une tuyauterie (1) pour fluides, par exemple pour liquides, gaz, avec un corps support (2) placé dans le fluide et mobile dans la direction longitudinale de la tuyauterie, dont la longueur, en particulier la longueur totale, est supérieure au plus petit diamètre de la tuyauterie (1), avec des capteurs de son, en particulier des capteurs à ultra-sons (11), disposés dans au moins une zone d'extrémité du corps-support (2), pour les ondes sonores générées par le fluide dans/au niveau du défaut, qui transforment électriquement les ondes, avec le cas échéant un amplificateur électrique pour lesdits signaux, avec un dispositif sur le corps-support (2) pour déterminer le trajet parcouru et/ou le temps passé par le corps-support (2) dans la tuyauterie, avec le cas échéant un galet prévu sur le corps-support (2) qui, en fonction de sa rotation, délivre des impulsions et est maintenu élastiquement en contact avec la paroi intérieure (9) de la tuyauterie et avec un dispositif d'enregistrement et de reproduction pour les signaux et le cas échéant les impulsions ainsi que le trajet parcouru et/ou le temps écoulé et avec au moins une source de courant et de tension, **caractérisé en ce que** le corps-support (2), dans ses deux régions d'extrémité, est muni de galets (7) qui sont montés avec amortissement sonore (Sa) sur celui-ci et **en ce qu'**il est prévu une protection (13) contre les bruits parasites pour le capteur (11).

2. Dispositif pour détecter des défauts selon la revendication 1, **caractérisé en ce qu'**il est prévu, après le capteur (11), vu dans la direction de déplacement (x) du corps-support (2), une protection (14) qui s'étend jusqu'à la paroi de la tuyauterie et amortit le son à mesurer.

3. Dispositif pour détecter des défauts selon la revendication 1 ou 2, **caractérisé en ce que** le capteur (11) comprend un capteur piézo ; en particulier une colonne piézo.

4. Dispositif pour détecter des défauts selon la revendication 1, 2 ou 3, **caractérisé en ce que** le corps-support (2) comporte des galets de roulement (7) montés articulés sur le corps-support (2), en particulier sur des bras (6), et peuvent être appliqués élastiquement contre la paroi intérieure (9) de la tuyauterie.

5. Dispositif pour détecter des défauts selon une des revendications 1 à 4, **caractérisé en ce que** d'une manière connue en soi, le corps-support (2) est formé de plusieurs corps élémentaires (16, 17) qui sont liés les uns aux autres avec possibilité de mouvement, en particulier par l'intermédiaire d'un tube flexible (18), par exemple d'un soufflet métallique, au moins un des corps élémentaires portant des galets.

6. Dispositif pour détecter des défauts selon la revendication 5, **caractérisé en ce que** la source de courant et de tension électrique est disposée dans un corps élémentaire (16) et **en ce que** le capteur (11), le dispositif d'enregistrement et le dispositif de reproduction sont disposés dans au moins un autre corps élémentaire (17) du corps-support (2).

7. Dispositif pour détecter des défauts selon une des revendications 1 à 6, **caractérisé en ce que** le corps-support (2), dans la région d'extrémité éloignée du capteur (11), porte un émetteur d'ultra-sons et/ou un émetteur d'ondes électromagnétiques et **en ce que** la tuyauterie (1) comporte des capteurs pour les signaux ultrasonores (26) et/ou les ondes électromagnétiques émis.

8. Dispositif pour détecter des défauts selon une des revendications 1 à 7, **caractérisé en ce que** la tuyauterie (1) comporte des sas (22, 23) pour l'introduction et l'extraction du corps-support (2).

9. Dispositif pour détecter des défauts selon la revendication 8, **caractérisé en ce que** dans la région d'au moins un sas (22) est disposé au moins un capteur (26) d'ultrasons et/ou d'ondes électromagnétiques.

10. Procédé pour détecter des défauts, le cas échéant des fuites dans une tuyauterie pour fluides, à l'aide d'un dispositif selon une des revendications 1 à 9, selon lequel on déplace un corps support, le cas échéant un corps-support est déplacé par le fluide, dans et le long de la tuyauterie, et un capteur enregistre des signaux qui sont amplifiés dans un amplificateur électrique, selon lequel on amplifie les signaux analogiques du capteur, on convertit les signaux de courant alternatif en signaux de courant continu dans un redresseur, puis en un signal numérique dans un convertisseur analogique-numérique et on mémorise la suite chronologique dans un dispositif d'enregistrement et de reproduction, en particulier dans un dispositif d'édition.

11. Procédé pour détecter des défauts selon la revendication 10, selon lequel on filtre les signaux en fonction de leur fréquence, avant leur entrée dans le redresseur.

12. Procédé pour détecter des défauts selon la revendication 10 ou 11, selon lequel on amplifie seulement deux plages de fréquences distinctes des signaux émis par le capteur.

13. Procédé pour détecter des défauts selon la revendication 10, 11 ou 12, selon lequel les signaux sont inscrits par le microprocesseur sous une forme numérique dans une mémoire à semi-conducteurs.
